# EUROPEAN PATENT APPLICATION

(11) **EP 1 376 323 A1**
(43) Date of publication of application: **02.01.2004**
(21) Application number: 02405540.2
(22) Date of filing: 27.06.2002
(51) Int. Cl.: G06F 3/033, G06F 9/44

(54) **Graphic user interface for hierarchically organised objects**

(71) Applicant: ABB RESEARCH LTD., 8050 Zürich (CH)
(72) Inventor: Naedele, Martin, 8048 Zürich (CH); Shah, Anuj, Atlanta, GA 30308 (US); Yuen, Cherry, 5405 Baden-Dättwil (CH); Conticelli, Fabio, 91025 Marsala (IT)
(74) Representative: ABB Patent Attorneys

(57) **Abstract**

A method for providing a graphic user interface for hierarchically organised objects, wherein a user interface is configured to display and modify parameters associated with the objects, and each object is associated with a set of parameter-value pairs, wherein the method comprises the steps of
- displaying, in a first screen area a first user interface means for selecting an object,
- upon selection of an object by a user, displaying in a second screen area a second user interface means that is configured for modifying parameters of the selected object and of its at least one descendant objects.

This allows visualising and modifying object properties of an object together with one or more of its descendants without having to repeatedly select the objects from the first screen area.

In a preferred embodiment of the invention, the second user interface means is dynamically composed, during execution of the method, from the current object hierarchy and from separately created interface definitions of the parent and descendant objects.

In a further preferred embodiment of the invention, a value of at least one parameter of a first object is determined by a value of a corresponding parameter of an ancestor object of the first object.

## Description

### Field of the Invention

The invention relates to the field of user interface technology. It relates to a method and computer program for providing a graphic user interface for hierarchically organised objects as described in the preamble of claim 1 and 11, respectively.

### Background of the Invention

Methods and computer programs for providing a graphic user interface for hierarchically organised objects are commonly used. One method for the interactive display of a graphical tree structure is implemented in the Microsoft Windows Explorer program. In order to access and modify properties associated with elements such as folders and files arranged in a hierarchy, each element must be selected individually, then a drop-down or pop-up menu entry must be selected in order to display and modify properties of the element.

### Description of the Invention

It is an object of the invention to create a method and computer program for providing a graphic user interface for hierarchically organised objects of the type mentioned initially, which provides a simplified access to an object and one or more of the object's descendants.

These objects are achieved by a method and computer program for providing a graphic user interface for hierarchically organised objects according to the claims 1 and 11.

In the inventive method, the user interface is configured to display and modify parameters associated with the objects, and each object is associated with a set of parameter-value pairs, wherein the method comprises the steps of
- displaying, in a first screen area a first user interface means for selecting an object,
- upon selection of an object by a user, displaying in a second screen area a second user interface means that is configured for modifying parameters of the selected object and of its at least one descendant objects.

This allows visualising and modifying object properties of an object together with one or more of its descendants without having to repeatedly select the objects from the first screen area.

In a preferred embodiment of the invention, the second user interface means is dynamically composed, during execution of the method, from the current object hierarchy and from separately created interface definitions of the parent and descendant objects. This allows independent development of the individual object interfaces, regardless of their later position in the object hierarchy.

In a further preferred embodiment of the invention, a value of at least one parameter of a first object is determined by a value of a corresponding parameter of an ancestor object of the first object. This allows propagating values of common parameters to a plurality of objects or object interfaces.

The computer program for providing a graphic user interface for hierarchically organised objects according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

Further preferred embodiments are evident from the dependent patent claims.

### Brief Description of the Drawings

The subject matter of the invention will be explained in more detail in the following text with reference to preferred exemplary embodiments, which are illustrated in the attached drawings, in which:
- Figure 1: schematically shows an object hierarchy;
- Figures 2 and 3: show screen shots of a definition editor GUI; and
- Figures 4 and 5: show screen shots of a parameter management GUI according to preferred embodiments of the invention.

### Detailed Description of Preferred Embodiments

The invention is explained as applied to the configuration of an electrical transmission system. It can, however, be applied to any industrial process, plant or to an organisatorial structure whose computer representation is organised hierarchically. In a preferred embodiment of the invention, such a hierarchy represents relations between software objects. The software objects correspond to and represent physical entities of a technical installation of process. The software objects comprise parameters that correspond to physical properties of said physical entities.

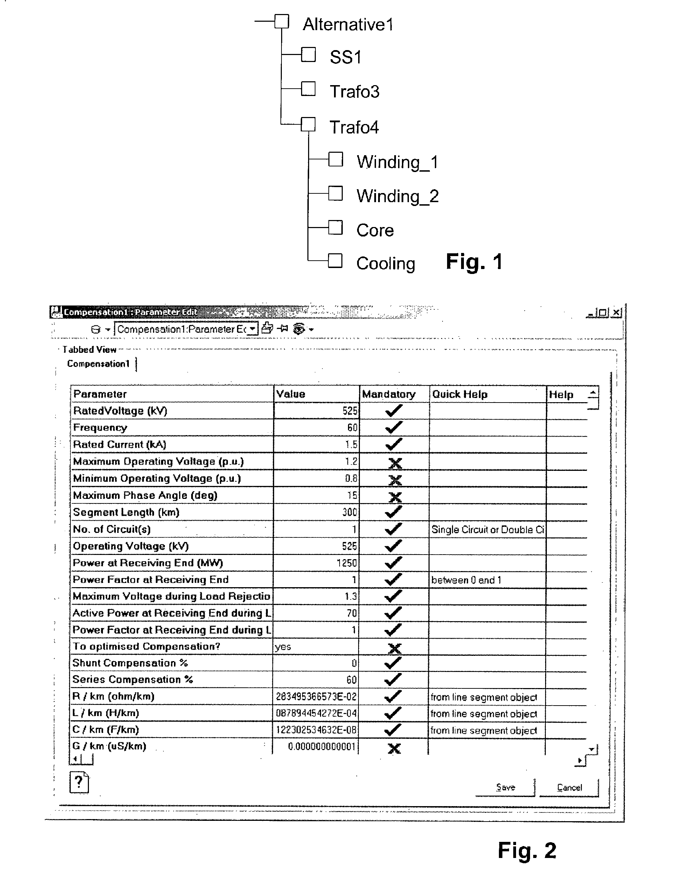

Figure 1 schematically shows an object hierarchy representing a design alternative for a transmission system, labelled "Alternative1". The alternative comprises a substation "SS1" and transformers "Trafo3" and "Trafo4". SS1 represents a substation, which in turn consists of primary equipment such as transformers, breakers, disconnectors, busbars, etc... and secondary equipment such as control devices, protection devices, etc.... "Trafo4" represents a transformer and in turn comprises elements such as windings, core, case, cooling subsystem, etc... Alternative1 is a parent node with respect to SS1, Trafo3 and Trafo4, which in turn are child nodes of Alternativel. Trafo4 is parent node with respect to its child nodes for windings and core and cooling. Children of children or descendant nodes of a given node are denoted as said node's descendant nodes. A parent of a parent or ancestor node of a given node is denoted as said node's ancestor node. In an actual implementation, the hierarchy usually contains an arbitrary number of levels.

Each of the nodes corresponds to an object, where the object is associated with a set of parameters. The parameters are defined for each object individually, without knowledge about or reference to the exact hierarchy in which the object may later be located.

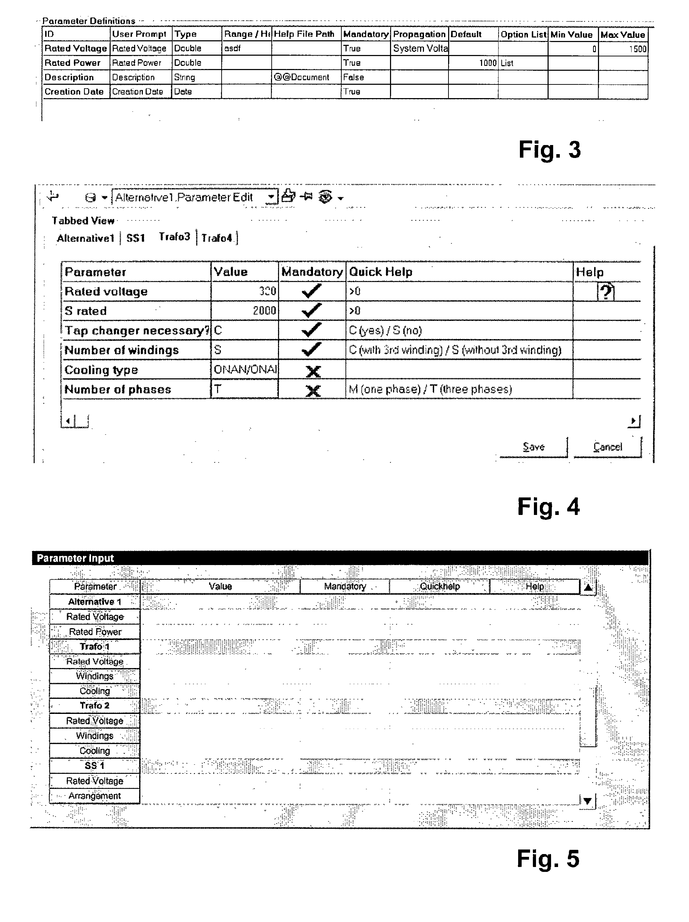

Figure 2 shows a screen shot of a definition editor GUI for defining an object's parameters. Each line of the table shown corresponds to one parameter. Each parameter is associated with attributes for an identification (ID), a user prompt, parameter type (numerical or textual or boolean...etc), range/short help, links to detailed help information, a flag denoting whether the parameter is mandatory or optional, propagation information, a default value, a list of options from which a value of the parameter may be chosen, and a minimum and maximum value. Range is a non-evaluated and non-enforced short help field to indicate allowed values in free text. Minimum/maximum values are limits for numerical values, which are enforced with respect to default values, option list values, and input values at run time by a type/validity check subsystem. The above attributes together constitute the user interface information of the parameter. Not all attributes are shown in Figure 2. Figure 3 shows part of a definition editor GUI for another object and with more columns according to the above attributes.

Essentially the only reference from parameter attributes to other objects is contained in the propagation information: the propagation information gives the ID of a parameter of an ancestor object whose value is to be inherited. For example, for a specific object corresponding to the GUI shown in Fig. 3, the propagation information attribute of the parameter with the ID "RatedVoltage" has the value "SystemVoltage". If, when said specific object is placed in a hierarchy where it has an ancestor node with an ID labelled "SystemVoltage", then the "RatedVoltage" of said specific object inherits the value of said "SystemVoltage".

The definition of an object's parameters and corresponding user interface information is therefore independent of a hierarchy in which the object may later be used. This greatly simplifies the design of a user interface for an entity represented by the hierarchy, e.g. a plant or process or organisation. The user interface information may be stored in a file, e.g. in XML (Extensible Markup Language) format. According to the invention, user interface information from a plurality of objects in a hierarchy is combined in a common interface, simplifying access to parameters and making access more efficient. Since no special design of the common interface is required, the common interface can be generated dynamically, i.e. after any change to the hierarchy, and during run-time, i.e. when executing a program for designing or controlling the entity represented by the object hierarchy.

This is done, upon selection of an object by a user, by displaying a user interface means that is configured for modifying all the parameters of the selected object, of its child objects and possible further descendant objects. User interface elements for viewing and modifying the parameters of these descendant objects are aggregated with the selected object's parameters, as shown in Figures 4 and 5.

Figure 4 shows a screen shot of a parameter management GUI according to one preferred embodiment of the invention. The GUI is displayed upon selecting the object "Alternative1", e.g. in a graphical representation similar to the hierarchy shown in Fig. 1, or from a list of objects. The GUI is displayed immediately, if the computer system is in a "browse parameters" mode. In another preferred embodiment of the invention, the GUI is displayed by the user initiating a corresponding action after selecting the object, e.g. by choosing an entry labelled "edit parameters" from a drop-down menu or pop-up menu.

The GUI shows, in a first preferred embodiment of the invention, a separate tab or register for the selected object and each of its descendant objects, labelled "Alternative1", "SS1", "Trafo3", "Trafo4" in the example. When the user clicks on one of the tabs, the parameters of the corresponding object are displayed in tabular form, each parameter together with data determined from the parameter's user interface information. If the user has appropriate privileges, the tabular form is an input mask, and she may change the value of the parameters. Parameter values are persistent and are stored in by the corresponding object. Parameters entered in the GUI may be immediately transmitted to the corresponding object or may be stored in a file, e.g. in XML format. For parameters that inherit the value from an ancestor node as described above, in a preferred embodiment of the invention, the value may be only changed in the ancestor node. After such a change, the value is propagated to all descendant nodes that refer to it. In another preferred embodiment of the invention, when a parameter is changed in an ancestor, the value will propagate to all descendant parameters bound to it. However, this propagation may be overridden for a specific descendant and its own descendants by changing the parameter in that specific descendant.).

In preferred embodiments of the invention, either tabs for only child nodes, or down to a predetermined number of levels, or for all descendants of an object are displayed. If necessary, means for scrolling horizontally through the tabs may be displayed. The tabs may be sorted in various ways: according to the hierarchy, e.g. in depth-first or breadth-first fashion, or alphabetically. The arrangement of tabs is generated at run-time, according to the current object hierarchy.

In another preferred embodiment of the invention, the parameters of the selected object and each of its descendant objects are arranged in a single table, as shown in Figure 5. In this preferred embodiment the input fields of all descendants are aggregated into a flat, scrollable list. The fields belonging to the individual descendants are separated by optical dividers, e.g. by a grey bar. Obviously, other arrangements in the flat list, e.g. grouping according to parameter id (e.g. all "rated voltage" fields together) and having the parameter name prefixed with the name of the descendant name, are also possible.

An apparatus according to the invention comprises a data processor, a memory coupled to the processor and computer program code means stored in said memory, where said computer program code means, when executed by the processor, causes the method according to the invention to be executed.

## Claims

1. A method for providing a graphic user interface for hierarchically organised objects, wherein
within a tree-like object hierarchy, a parent object is associated with at least one descendant object,
the user interface is configured to display and modify parameters associated with the objects,
each object is associated with a set of parameter-value pairs,
**characterized in that** the method comprises the steps of
• displaying, in a first screen area a first user interface means for selecting an object,
• upon selection of an object by a user, displaying in a second screen area a second user interface means that is configured for modifying parameters of the selected object and of its at least one descendant objects.

2. Method according to claim 1, wherein at least one of the descendant objects is a parent object with respect to further descendant objects, and the second user interface means is configured for displaying and modifying parameters of the further descendant objects as well.

3. Method according to claim 1, wherein the second user interface means is dynamically composed, during execution of the method, from the current object hierarchy and from separately created interface definitions of the parent and descendant objects.

4. Method according to claim 1, wherein a value of at least one parameter of a first object is determined by a value of a corresponding parameter of an ancestor object of the first object.

5. Method according to claim 1, comprising the steps of, in the second user interface means,
- displaying a set of tabs, each tab being associated with one of the selected object and at least one of its descendant objects,
- displaying, upon selection of a tab by a user, a table for the associated object, the table showing the set of the object's parameter-value pairs.

6. Method according to claim 1, wherein the second user interface means comprises parameter-value pairs of the selected object and its at least one descendant object arranged in a table, the table having a separate section for each of the objects.

7. Method according to claim 1, wherein each parameter-value pair is associated with further information comprising at least one of parameter type, range, help information, mandatory/optional, propagation information, default value and option list.

8. Method according to claim 1, wherein the objects correspond to physical entities of a technical installation of process and the parameters correspond to physical properties of said physical entities.

9. Method according to claim 8, wherein the parameters comprise engineering parameters whose values are determined in a design phase of the installation of process.

10. Method according to claim 8, wherein the parameters comprise control parameters whose values are determined during an operation phase of the installation of process.

11. Computer program for providing a graphic user interface for hierarchically organised objects which is loadable and executable on a data processing unit and which computer program, when being executed, performs the steps according to the method of one of claims 1 to 10.
